# EUROPÄISCHE PATENTANMELDUNG

(11) **EP 0 860 595 A1**
(43) Veröffentlichungstag der Anmeldung: **26.08.1998**
(21) Anmeldenummer: 98102072.0
(22) Anmeldetag: 06.02.1998
(51) Int. Cl.: F02D 41/02, F01N 3/08

(54) **Verfahren zur Entschwefelung einer Stickoxidfalle im Abgassystem eines Verbrennungsmotors**

(30) Priorität: 20.02.1997 DE 19706608
(71) Anmelder: Ford Global Technologies, Inc., Dearborn, Michigan 48126 (US)
(72) Erfinder: Dickers, Guido, 41068 Mönchengladbach (DE); Mayer, Thomas E., 50859 Köln (DE); Phlips, Patrick, Dr., 50585 Köln (DE); Grieser, Klemens, 40764 Langenfeld (DE)
(74) Vertreter: Bonsmann, Manfred, Dipl.-Ing.

(57) **Zusammenfassung**

Die Erfindung betrifft ein kraftstoffsparendes Verfahren zur Entschwefelung einer Stickoxidfalle im Abgassystem eines Verbrennungsmotors mit Einrichtungen zur Beeinflussung der Temperatur der Stickoxidfalle und zur Beeinflussung des Luft-/Kraftstoffverhältnisses des dem Verbrennungsmotor zugeführten Gemisches. Die aktuelle SOₓ-Aufnahmerate wird anhand eines funktionalen Zusammenhangs bestimmt und zeitlich integriert. Bei Überschreiten eines Schwellwerts wird ein Entschwefelungszyklus initiiert, währenddessen die Stickoxidfalle für eine vorgegebene Zeit auf eine vorgegebene Temperatur gebracht und der Verbrennungsmotor in dieser Zeit mit einem vorgegebenen Luft-/Kraftstoffverhältnis betrieben wird. Die Veränderung der Temperatur erfolgt mittels einer Veränderung des Zündzeitpunktes in Richtung "spät" sowie mittels eines variablen Abgassystems.

## Beschreibung

Die Erfindung betrifft ein Verfahren zur Entschwefelung einer Stickoxidfalle im Abgassystem eines Verbrennungsmotors mit Einrichtungen zur Beeinflussung der Temperatur der Stickoxidfalle und zur Beeinflussung des Luft-/Kraftstoffverhältnisses des dem Verbrennungsmotor zugeführten Gemisches sowie Einrichtungen zur Durchführung des Verfahrens.

Der Einsatz einer Stickoxidfalle (NOₓ-Trap) in Verbindung mit einem konventionellen Dreiwegekatalysator erfolgt bevorzugt bei Kraftfahrzeugen, deren Verbrennungsmotor für einen Magerbetrieb (sog. lean burn engine) vorgesehen ist. Die Stickoxidfalle vermindert die Stickoxidemission, indem Stickoxidmoleküle an der Beschichtung der Falle angelagert werden. In regelmäßigen Zeitabständen muß ein Regenerationszyklus durchgeführt werden, währenddessen die in der Falle gespeicherten Stickoxide u.a. zu molekularem Stickstoff umgesetzt werden. Ein Problem bei bekannten Stickoxidfallen liegt darin, daß diese nicht nur Stickoxide, sondern auch die bei der Verbrennung der üblichen schwefelhaltigen Kraftstoffe entstehenden Schwefeloxide (SOₓ) aufnehmen, wobei die Affinität bekannter Stickoxidfallenbeschichtungen für Schwefeloxide sogar größer als deren Affinität für Stickoxide ist. Durch die Anlagerung von Schwefeloxiden entsteht der unerwünschte Effekt, daß die Falle für die Aufnahme von Stickoxiden blockiert wird. Die Schwefeloxide lassen sich aufgrund ihrer grösseren Affinität durch den regelmäßig ausgeführten NOₓ-Regenerationszyklus, bei dem der Motor im wesentlichen mit einem fetten Luft-/Kraftstoffgemisch betrieben wird, nicht wirksam entfernen. Vielmehr muß die Stickoxidfalle zur Entschwefelung für eine bestimmte Zeitdauer auf eine relativ hohe Temperatur (bei den bekannten Stickoxidfallen ca. 700 °C) gebracht werden, wobei zur Unterstützung des Entschwefelungsprozesses vorzugsweise gleichzeitig ein leicht fettes Luft-/Kraftstoffgemisch eingestellt wird. Zum Erreichen dieser Entschwefelungsbedingungen müssen die Motorbetriebsbedingungen gezielt manipuliert werden, was im allgemeinen zu einem höheren Kraftstoffverbrauch führt.

Der Erfindung liegt die Aufgabe zugrunde, ein Verfahren der eingangs erwähnten Art so durchzuführen, daß ein möglichst geringer zusätzlicher Kraftstoffverbrauch durch die Entschwefelung entsteht.

Die Lösung dieser Aufgabe erfolgt mittels der Verfahrensschritte gemäß dem Kennzeichnungsteil des Patentanspruches 1. Durch die Bestimmung eines Akkumulatorwertes durch zeitliche Integration des Wertes der SOₓ-Aufnahmerate wird erreicht, daß ein Entschwefelungszyklus nur dann initiiert wird, wenn eine bestimme vorgegebene SOₓ-Menge von der Falle aufgenommen wurde. Gegenüber einer Lösung, bei der ein Entschwefelungszyklus beispielsweise nach jeder Tankbefüllung gestartet wird, führt die erfindungsgemäße Initiierung des Entschwefelungszyklus zu einer Kraftstoffersparnis, da die Entschwefelung nur bei Bedarf durchgeführt wird. Der Entschwefelungszyklus kann allerdings nur in einem vorgegebenen Motorparameterbetriebsbereich durchgeführt werden. So ist z.B. im Leerlauf eine Entschwefelung nicht möglich, da die erforderliche Temperatur der Stickoxidfalle bei den dann herrschenden Motorbetriebsbedingungen nicht erreichbar ist. Deshalb kann in vorteilhafter Weise eine Überwachung vorgesehen sein, ob sich der Verbrennungsmotor oberhalb einer vorgegebenen Drehzahl/Lastkennlinie befindet. Ist dies nicht der Fall, so kann der Entschwefelungszyklus hinausgezögert werden, bis diese Bedingung erfüllt ist.

Vorteilhafterweise kann im Rahmen der Erfindung auch vorgesehen sein, daß die Stickoxidfalle zur Entschwefelung auf eine Temperatur von etwa 700 °C gebracht und der Verbrennungsmotor währenddessen mit einem Gemisch mit leicht fettem Luft-/Kraftstoffverhältnis betrieben wird.

Die Entschwefelungstemperatur der Stickoxidfalle kann dadurch erreicht werden, daß der Zündzeitpunkt in Richtung "spät" verschoben wird. Dadurch findet der Verbrennungsvorgang teilweise im Abgassystem statt, was zu einer Aufheizung der im Abgassystem angeordneten Stickoxidfalle führt.

Durch die Änderung des Zündzeitpunktes sinkt der Wirkungsgrad des Motors und somit das Motordrehmoment. Dieser unerwünschte Effekt kann dadurch kompensiert werden, daß die Luftzufuhr zum Verbrennungsmotor entsprechend erhöht wird. Dies geschieht vorzugsweise durch Einwirkung auf eine elektronisch gesteuerte Drosselklappe.

Die zur Entschwefelung erforderlichen Temperaturen und das leicht fette Gemisch können auch ohne Durchführung eines Entschwefelungszyklus erreicht werden, wenn der Verbrennungsmotor beispielsweise im Vollastbereich betrieben wird. Um unnötige Entschwefelungszyklen zu vermeiden, kann in zweckmäßiger Ausgestaltung der Erfindung vorgesehen sein, daß die Durchführung des Entschwefelungszyklus dann durch Zurücksetzen des Akkumulatorwertes unterdrückt wird, wenn der Verbrennungsmotor für eine vorgegebene Mindestzeitdauer innerhalb eines vorgegebenen Motorparameterbereichs betrieben wird.

Da eine direkte Bestimmung der Schwefeloxidaufnahmerate der Stickoxidfalle mit sehr großem Aufwand verbunden wäre, erfolgt die Bestimmung des Wertes der Schwefeloxidaufnahmerate der Stickoxidfalle vorzugsweise mittels eines funktionalen Zusammenhangs in Abhängigkeit vom Gehalt an Schwefelverbindungen in dem verwendeten Kraftstoff, dem aktuellen Kraftstoffmassenstrom in dem Verbrennungsmotor und der aktuellen Abgastemperatur an der Stickoxidfalle. Es kann vorgesehen sein, daß der vorgegebene Gehalt an Schwefelverbindungen im Kraftstoff änderbar ausgelegt ist, so daß eine Anpassung an neue Kraftstoffarten möglich ist.

In zweckmäßiger Ausgestaltung der Erfindung kann vorgesehen sein, daß der Entschwefelungszyklus die Unterschritte des Einwirkens auf die Einrichtungen zur Beeinflussung der Temperatur der Stickoxidfalle, dahingehend daß die Stickoxidfalle auf eine näherungsweise einer vorgegebenen Temperatur zur Entschwefelung entsprechende Temperatur verändert wird, der Bestimmung der Temperatur der Stickoxidfalle und des Messens der Zeitdauer, während derer die Stickoxidfalle eine Temperatur oberhalb einer vorgegebenen Entschwefelungstemperatur aufweist, und des Beendens des Entschwefelungszyklus, wenn die Zeitdauer, während derer sich die Stickoxidfalle oberhalb der vorgegebenen Temperaturschwelle befindet, einen vorbestimmten Wert überschreitet, aufweist. Die Temperatur der Stickoxidfalle wird also zunächst näherungsweise eingestellt. Der Entschwefelungszyklus wird fortgesetzt, bis für eine vorgegebene Zeitdauer die für die Stickoxidfalle vorgegebene Temperaturschwelle überschritten wurde. Ist nach einer vorgegebenen Zeit die Temperaturschwelle noch nicht erreicht, so kann der Entschwefelungszyklus mit einer Fehlermeldung abgebrochen werden.

Zur Bestimmung der Temperatur der Stickoxidfalle kann ein Temperaturmodell der Stickoxidfalle vorgesehen sein. Durch ein derartiges Temperaturmodell wird der Wärmehaushalt der Stickoxidfalle abhängig von einer Vielzahl von Parametern, z.B. von der Wärmekapazität der Stickoxidfalle, der Abgastemperatur, dem Abgasmassenstrom, der Geschwindigkeit des Kraftfahrzeuges etc. simuliert.

Anstelle des Temperaturmodells oder zusätzlich zu dem Temperaturmodell kann in weiterer Ausgestaltung der Erfindung ein Temperatursensor in räumlicher Nähe der Stickoxidfalle vorgesehen sein.

Die Veränderung des Zündwinkels reicht unter bestimmten Betriebsbedingungen (z.B. Stadtverkehr) nicht aus, um die erforderlichen Entschwefelungstemperaturen zu erreichen, vor allem dann, wenn die Stickoxidfalle relativ weit entfernt vom Motor angeordnet ist (d.h., wenn keine sog. closed coupled-Anordnung der Stickoxidfalle vorgesehen ist). Deshalb können in vorteilhafter Ausgestaltung der Erfindung zur Veränderung der Temperatur der Stickoxidfalle Mittel zum selektiven Führen der Abgase vom Verbrennungsmotor zur Stickoxidfalle über unterschiedliche Abgaswege, in denen unterschiedliche Abgastemperaturverluste auftreten, vorgesehen sein (sog. variable exhaust system).

Die Erfindung wird nachfolgend anhand der Zeichnungen beispielhaft näher erläutert. Es zeigen:
- Fig. 1: ein Diagramm mit der zeitlichen Entwicklung verschiedener Motorparameter bei Durchführung eines erfindungsgemäßen Entschwefelungszyklus,
- Fig. 2: ein schematisches Drehzahl-/Lastbereichsdiagramm mit einer Darstellung verschiedener Betriebsbereiche des Verbrennungsmotors.

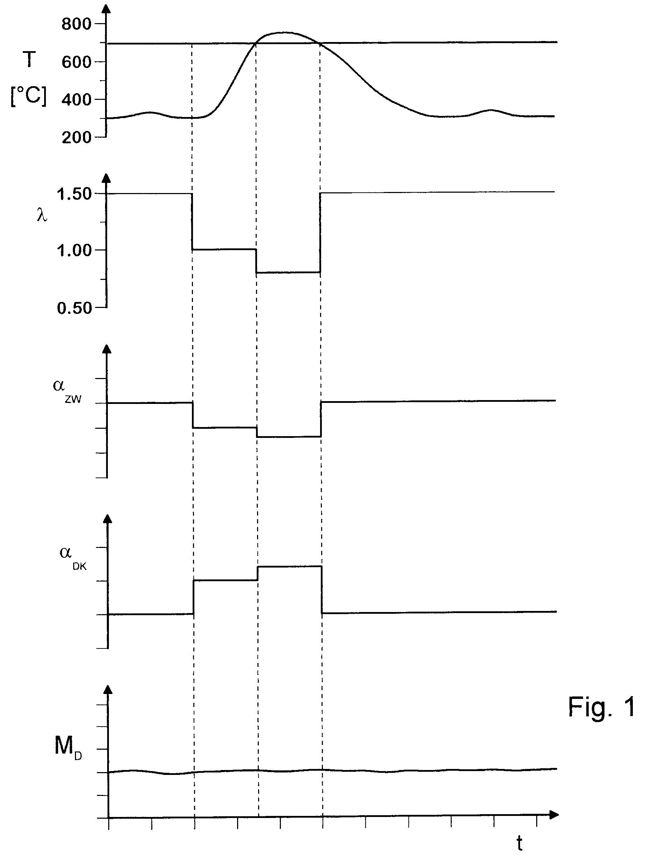

In Fig. 1 ist die zeitliche Entwicklung der Temperatur T der Stickoxidfalle, des Luft-/Kraftstoffverhältnisses lambda, des Zündwinkels α_{ZW}, des Drosselklappenwinkels α_{DK} sowie des Motordrehmoments M_{D} bei Durchführung eines erfindungsgemäßen Entschwefelungszyklus dargestellt.

Eine (nicht dargestellter) Verbrennungsmotor erhält Kraftstoff über eine Kraftstoff-Einspritzanlage sowie Luft über eine elektronisch steuerbare Drosselklappe. Eine elektronische Motorsteuerung steuert die Einspritzanlage, die Drosselklappe etc. und erhält eine Vielzahl von Eingangssignalen wie z.B. die Motordrehzahl. Im Abgassystem befindet sich eine Katalysatoranordnung mit einer Stickoxidfalle und einem Dreiwegekatalysator. Außerdem ist ein variables Abgassystem vorgesehen, d.h. eine Einrichtung zum selektiven Führen der Abgase vom Verbrennungsmotor zur Stickoxidfalle über unterschiedliche Abgaswege, in denen unterschiedliche Abgastemperaturverluste auftreten.

Der Motor arbeitet bei dem in Fig. 1 dargestellten Beispiel in einem Magerbetrieb. Die Schwefeldioxidaufnahmerate wird in der vorstehend beschriebenen Weise in regelmäßigen Zeitabständen (z.B. jede Sekunde) anhand eines funktionalen Zusammenhangs bestimmt. Der Wert der Schwefeldioxidaufnahmerate wird auf einen Akkumulatorwert aufaddiert. Ist ein vorgegebener Schwellwert überschritten, wird der Entschwefelungszyklus initiiert. Dazu wird der Zündwinkel α_{ZW} in Richtung "spät" verstellt und das Luft-/Kraftstoffverhältnis lambda auf einen leicht fetten Wert eingestellt. Um die Auswirkungen auf das Motordrehmoment zu kompensieren, wird der Drosselklappenwinkel α_{DK} vergrößert, so daß der Luftmassenstrom in den Verbrennungsmotor ansteigt. Dadurch bleibt das Motordrehmoment M_{D} im wesentlichen konstant. Außerdem wird das variable Abgassystem so angesteuert, daß die Abgase auf einem kürzeren Weg zur Stickoxidfalle geführt werden. Diese Maßnahmen führen insgesamt - mit einer zeitlichen Verzögerung - zu einem Anstieg der Temperatur der Stickoxidfalle. Die Temperatur der Stickoxidfalle wird mittels eines Temperatursensors bestimmt. Der Entschwefelungszyklus läuft solange, bis die Stickoxidfalle für eine vogegebene Zeitdauer eine Temperatur oberhalb der vorgegebenen Entschwefelungstemperaturschwelle (angedeutet durch eine horizontale Linie im obersten Diagramm von Fig. 1) überschritten hat. Anschließend wird der Akkumulator zurückgesetzt. Die Dauer eines derartigen Entschwefelungszyklus beträgt typischerweise etwa 30 s.

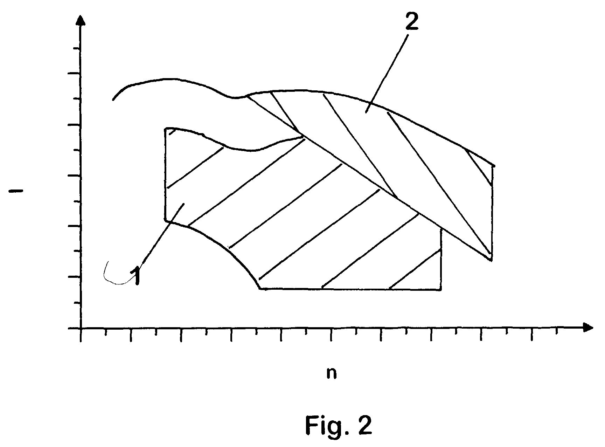

In Fig. 2 ist schematisches Drehzahl-/Lastbereichsdiagramm eines Verbrennungsmotors dargestellt, wobei auf der X-Achse die Drehzahl n und auf der Y-Achse die Last (load) l aufgetragen ist. Der Entschwefelungszyklus kann eingeleitet werden, wenn der Motor innerhalb des Bereichs 1 betrieben wird. Bei einem Betrieb im Bereich 2 für eine vorgegebene Zeitdauer (Vollastbereich) wird der Entschwefelungszyklus durch Rücksetzen des Akkumulatorwertes unterdrückt. Bei einem Betrieb des Motors außerhalb der Bereiche 1 und 2 wird kein Entschwefelungszyklus initiiert, da in diesen Betriebsbereichen die zur Entschwefelung erforderlichen Temperaturen nicht erreicht werden können.

## Patentansprüche

1. Verfahren zur Entschwefelung einer Stickoxidfalle im Abgassystem eines Verbrennungsmotors mit Einrichtungen zur Beeinflussung der Temperatur der Stickoxidfalle und zur Beeinflussung des Luft-/Kraftstoffverhältnisses des dem Verbrennungsmotor zugeführten Gemisches, dadurch gekennzeichnet, daß das Verfahren die folgenden Schritte aufweist:
a) Bestimmen eines der aktuellen SOₓ-Aufnahmerate der Stickoxidfalle entsprechenden Wertes und Bestimmen eines der durch die Stickoxidfalle aufgenommenen SOₓ-Menge entsprechenden Akkumulatorwertes durch zeitliche Integration des Wertes der SOₓ-Aufnahmerate, und zwar solange, bis der Akkumulatorwert einen vorgegebenen Schwellwert erreicht hat,
b) wenn die aufgenommene SOₓ-Menge den Schwellwert erreicht hat und der Verbrennungsmotor in einem vorgegebenen Betriebsparamterbereich arbeitet, Initiierung eines Entschwefelungszyklus, indem die Stickoxidfalle für eine vorgegebene Zeit auf eine vorgegebene Temperatur gebracht und der Verbrennungsmotor in dieser Zeit mit einem vorgegebenen Luft-/Kraftstoffverhältnis betrieben wird, und
c) Rücksetzen des Akkumulatorwertes nach Abschluß des Entschwefelungszyklus.

2. Verfahren nach Anspruch 1, dadurch gekennzeichnet, daß die Temperatur, auf die die Stickoxidfalle während des Entschwefelungszyklus gebracht wird, bei etwa 700 °C liegt.

3. Verfahren nach Anspruch 1 oder 2, dadurch gekennzeichnet, daß der Verbrennungsmotor während des Entschwefelungszyklus mit einem leicht fetten Luft-/Kraftstoffgemisch betrieben wird.

4. Verfahren nach einem der Ansprüche 1 bis 3, dadurch gekennzeichnet, daß die vorgegebene Temperatur während des Entschwefelungszyklus durch eine Verschiebung des Zündzeitpunktes in Richtung "spät" herbeigeführt wird.

5. Verfahren nach Anspruch 4, dadurch gekennzeichnet, daß eine aufgrund der Verschiebung des Zündzeitpunktes in Richtung "spät" während des Entschwefelungszyklus auftretende Verringerung des Motordrehmoments durch eine Veränderung der Luftzufuhr zum Verbrennungsmotor kompensiert wird.

6. Verfahren nach einem der Ansprüche 1 bis 5, dadurch gekennzeichnet, daß die Durchführung des Entschwefelungszyklus unterdrückt wird, indem der Akkumulatorwert dann zurückgesetzt wird, wenn der Verbrennungsmotor für eine vorgegebene Zeit innerhalb eines vorgegebenen Motorparameterbereichs betrieben wird.

7. Verfahren nach einem der Ansprüche 1 bis 6, dadurch gekennzeichnet, daß die Bestimmung eines der aktuellen SOₓ-Aufnahmerate der Stickoxidfalle entsprechenden Wertes mittels eines funktionalen Zusammenhangs in Abhängigkeit vom Gehalt an Schwefelverbindungen in dem verwendeten Kraftstoff, dem aktuellen Kraftstoffmassenstrom in dem Verbrennungsmotor und der aktuellen Abgastemperatur an der Stickoxidfalle erfolgt.

8. Verfahren nach einem der Ansprüche 1 bis 7, dadurch gekennzeichnet, daß Schritt b) die folgenden Unterschritte aufweist:
i) Einwirken auf die Einrichtungen zur Beeinflussung der Temperatur der Stickoxidfalle, dahingehend, daß die Stickoxidfalle auf eine näherungsweise einer vorgegebenen Temperatur zur Entschwefelung entsprechende Temperatur verändert wird,
ii) Bestimmung der Temperatur der Stickoxidfalle und Messen der Zeitdauer, während derer die Temperatur der Stickoxidfalle eine vorgegebene Entschwefelungstemperaturschwelle überschritten hat, und
iii) Beenden des Entschwefelungszyklus, wenn die Zeitdauer, während derer die Stickoxidfalle die vorgegebene Entschwefelungstemperaturschwelle überschreitet, einen vorbestimmten Wert überschreitet.

9. Verfahren nach Anspruch 8, dadurch gekennzeichnet, daß die Bestimmung der Temperatur der Stickoxidfalle anhand eines Temperaturmodells der Stickoxidfalle erfolgt.

10. Einrichtung zur Durchführung des Verfahrens nach Anspruch 8 oder 9, dadurch gekennzeichnet, daß zur Bestimmung der Temperatur der Stickoxidfalle ein in räumlicher Nähe zur Stickoxidfalle angeordneter Temperatursensor vorgesehen ist.

11. Einrichtung zur Durchführung des Verfahrens nach einem der Ansprüche 1 bis 9, dadurch gekennzeichnet, daß zur Veränderung der Temperatur der Stickoxidfalle Mittel zum selektiven Führen der Abgase vom Verbrennungsmotor zur Stickoxidfalle über unterschiedliche Abgaswege, in denen unterschiedliche Abgastemperaturverluste auftreten, vorgesehen sind.
